# EUROPEAN PATENT APPLICATION

(11) **EP 2 947 784 A1**
(43) Date of publication of application: **25.11.2015**
(21) Application number: 15161524.2
(22) Date of filing: 27.03.2015
(51) Int. Cl.: H04B 3/54, H04B 1/7163

(54) **METHOD AND APPARATUS FOR TRANSMITTING DATA SIGNALS**

(30) Priority: 23.05.2014 IT UD20140088
(71) Applicant: Witikee SRL, 33100 Udine (IT)
(72) Inventor: Tonello, Andrea, 33100 Udine (IT); Versolatto, Fabio, 33037 Pasian di Prato (UD) (IT)
(74) Representative: Petraz, Gilberto Luigi

(57) **Abstract**

Method for transmitting through an electric network (11) one or more digital information streams (22) containing data relating to information to be transmitted, wherein said method comprises a signal generating step (21b) that generates one or more data signals (30) and a coupling and transmission step (21c) of said one or more data signals (30). The signal generating step (21b) is a step of generating a pulsed signal that comprises one or more modulation operations (25) and one or more filtering operations (26) in which the one or more digital information streams (22) are converted into said one or more data signals (30). These are generated as pulsed analog data signals defined by an alternate succession of pulsed wave forms (31) and periods without a signal (32), and are adapted to the characteristics of the transmission mean defined by said electric network (11).

## Description

### FIELD OF THE INVENTION

Forms of embodiment described here concern a method and an apparatus for transmitting data signals through electric lines.

In particular, forms of embodiment described here can be used in various fields in the state of the art to generate an analog signal and to carry a stream of digital data in said analog signal to be transmitted by means of electric lines.

Forms of embodiment described here can be applied, by way of non-restrictive example, in domestic, residential and industrial remote command and control systems with high robustness, such as for example domotic devices, or remote automation, or to control electric loads and the accurate management of lighting plants or electric actuation of accessories. The present invention is also applied in vehicles, in industrial fields, for the transmission of data on means of transport such as automobiles, trains, planes and ships.

### BACKGROUND OF THE INVENTION

Technologies are known, which allow to transmit data through electric lines and are commonly referred to as "power line communications" (PLC) or "powerlines".

For ease of description, hereafter in the text we shall refer to these technologies using the term "PLC technologies".

It is known that PLC technologies provide to superimpose a telecommunication signal with high frequency and low amplitude over a high-voltage feed signal used to distribute the electric power, or network signal. Known PLC technologies also provide to use transceivers configured to reconstruct the information transmitted, filtering the feed signal and processing the telecommunication signal.

In Europe, the frequency of the feed signal is known to be equal to 50 Hz and the power of the signal supplied by PLC technologies is low, in order to satisfy legislative limits in terms of electromagnetic compatibility, to prevent interference with other devices connected to the electric network and to guarantee the correct functioning of the latter.

PLC technologies are generally classified in two classes, narrowband or broadband. Narrowband PLC technologies operate in the frequency range below 500 kHz, while broadband PLC technologies normally operate in the frequency range comprised between 1.6 MHz and 100 MHz. Extensions to bands above 100 MHz are possible, however.

In general, narrowband PLC technology is used for low speed communications, that is, with a data transmission speed, also known as "data rate", less than one Megabit per second, and possibly high robustness. An example of a narrowband PLC technology application is remote reading of meters. In the case of electric energy, remote reading allows the service provider to monitor consumption, interrogating the user's electricity meter remotely. The meter is read for example once or a few times per month and the quantity of data for every reading is limited to a few bits. Therefore, the data rate required for every user is very low.

Another example of narrowband PLC technology application is the remote control of cut-off devices located in transformer substations of the electric network or renewable generation plants. In this case too, the transmission speed is very low, but low latencies and high robustness are required.

In general, narrowband PLC technology is suitable to satisfy needs of so-called "Smart Grid" applications, where Smart Grid means the combination of solutions intended for the smart management of devices for the production and consumption of electric energy.

On the contrary, broadband PLC technologies are devised for very high speed communications.

For example, in the domestic field, broadband PLC technology can offer transmission speeds of hundreds of Megabits per second, and therefore similar to those of other cabled communication solutions, such as the local network or Ethernet.

For high speed data transmission on electric lines, document US-A-2004/022304 (US'304) is known, which describes an ultra-wide band (UWB) data transmission method using conventional pulses on electric lines, deriving from similar solutions used in wireless communication systems.

Document WO-A-2004/021658 describes an information encoding method that uses a pair of bipolar pulses, with the same shape and amplitude but the opposite sign, which transmitted in defined and consecutive periods allow to decode and detect possible errors introduced by the communication mean.

Document US-A-2004/218688 is also known, which describes how to use the communication method already described in US'304 on electric distribution lines, that is, outside the domestic context, by using repeaters installed for this purpose upstream and downstream of the transformer cabins.

Broadband PLC technology can also be used in combination with wireless technologies, to obtain extensive cover.

However, the electric network was not devised for data transmission and its behavior is therefore far from ideal.

It is therefore necessary for PLC technologies to deal with strong attenuations, marked fading phenomena, and loud noise, both pulsed and background. Attenuation is responsible for the reduction in amplitude of the signal received, and is imputable to the structure of the electric network and the nature of conductors. Fading phenomena are generated by disadaptations, such as the presence of joints, and lead to multiple copies of the signal transmitted being received, which are out of phase and distorted with respect to each other and to the original signal. Finally, noise is caused by a multitude of factors, such as the activity of household goods, radio disturbances captured by the electric network, etc. A loud noise can have destructive effects and make communication impossible if suitable strategies are not adopted to contrast it.

It is known that noise has greater power in the band portions where narrowband PLC technologies operate. Among the main sources of noise there are switching feeders and current convertors, or inverters. Both inject spurious components, especially in the frequency range below 500 kHz. Switching feeders are integrated, for example, in personal computers, televisions and battery-chargers. Inverters are used for example in photovoltaic plants to convert the direct current generated by the panels into alternate current in conformity with the network signal. The increase in photovoltaic installations has made the noise problem crucial, with regard to the reliability and performance of narrowband PLC technologies.

Solutions based on currently standardized narrowband PLC technologies are based on multi-bearing modulation patterns, such as orthogonal frequency division multiplexing (OFDM), or single-bearer but narrowband modulations, such as frequency shift keying (FSK) modulation.

One requirement of the transmitters used for generating signals in multi-bearer modulations is to have a linear behavior and low distortion. This entails high implementation costs and design complexity.

In the case of multi-bearer modulations, the system suffers from the presence of narrowband noise which is very often present in real application scenarios.

In any case, one disadvantage of narrowband PLC technologies is that they are particularly sensitive to the strong criticalities of the mean in the band where they are obliged to operate. On the contrary, broadband technologies have the advantage that they can exploit the difference in frequency of the transmission mean and overcome the limits due to strong narrowband interferences or strongly attenuated spectrum windows, by transmitting in the remaining portions of the spectrum.

In this context, document GB-A-2.393.370 is also known, which proposes a method for UWB transmission at frequencies above GHz and such that the transmitter and the receiver can, in general, be antennas coupled with the conductors of the electric lines. In this case, propagation occurs between the conductors and the ground plane, exploiting signals in the common way.

Document WO-A-03/030397 (WO'397) is also known, which describes a method for reducing radiations due to the data signals carried through electric lines through a procedure of adapting to the impedance of the electric network. However, the method described in WO'397 is limited to disadaptation phenomena due to the effect of asymmetries with respect to the common reference (mass potential) and is specifically intended to reduce emissions.

Document US-A-2010/0296550 is also known, which proposes to use block precoding techniques in combination with PAM-PPM modulation techniques for radio UWB applications or on optical guides. On this point, document GB-A-2.383.724 is also known, which describes a multi-conductor communication system that exploits the spatial diversity given by inductive couplings between adjacent conductors.

There is therefore a need to perfect a method and an apparatus for transmitting data signals that can overcome at least one of the disadvantages of the state of the art.

In particular, one purpose of the present invention is to perfect a method for transmitting data signals, through electric lines, on a much bigger band than the data rate of the stream of digital information, which is able to guarantee transmission robustness and reliability even in the presence of strong attenuations and marked fading phenomena due to the imperfections of the transmission mean.

Another purpose of the present invention is to exploit the phenomena of conducted propagation instead of radiated propagation which affect the highest frequencies, above GHz, and to exploit signals in differential mode instead of common mode.

Another purpose of the present invention is to perfect a method for transmitting data signals through electric lines that is able to confer on the signals transmitted immunity both with respect to the background noise and also to the pulsed noise present in the electric lines themselves.

Another purpose of the present invention is to perfect a transmission method that is able to adapt the data signals transmitted to the input impedance of an electric network, to limit possible losses due to disadaptation, that is usable for transmission both on alternate current (AC) networks and on direct current (DC) networks, and which is able to identify and exploit the spectrum portion most suitable for transmission.

Another purpose of the present invention is to obtain an apparatus that is able to generate data signals transmittable through electric networks and modulated according to the transmission method described above, and which, with respect to existing solutions, is simpler to make and advantageous from the point of view of implementation and costs.

Another purpose of the present invention is to adapt the data signals transmitted to the input impedance of an electric network in order to maximize the transmission speed and robustness of the transmission system.

Another purpose of the present invention is to transmit on several pairs of conductors, to obtain a multiple-input, multiple-output transmission that exploits temporal space precoding techniques.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a method according to the present invention is used for transmitting, through an electric network, one or more digital information streams containing data relating to information to be transmitted. The method comprises a signal generating step that generates one or more data signals and a coupling and transmission step of the one or more data signals.

According to one feature of the present invention, the signal generating step is a step of generating a pulsed signal that comprises one or more modulation operations and one or more filtering operations in which the digital information stream is converted into the one or more data signals, wherein the one or more data signals are generated as pulsed analog data signals defined by an alternate succession of pulsed wave forms and periods without a signal, and in which the one or more data signals are adapted to the characteristics of the transmission mean defined by the electric network.

According to some forms of embodiment, the information can therefore be transmitted through pulsed analog signals in which the periods without a signal allow to deal with the dispersion over time caused by the multiple path propagation phenomena that cause fading.

It may also be provided to decode the one or more data signals to make the original digital information stream. In this way, the transmission of information contained in the digital information stream may therefore be considered completed.

According to the present invention, the signal generating step provides to generate broadband pulsed data signals with respect to the data transmission speed of the one or more digital information streams and adapted to the conditions of the channel, the noise and the line impedance, in order to maximize performance, for example in terms of signal-noise ratio to a receiver.

Using broadband advantageously allows to exploit the difference in frequency of the data signals to offer greater robustness to the transmission.

The transmission method thus obtained allows very robust communications and lends itself to use, for example, for remote automation of transformer substations of the electric energy distribution network, or automation in an industrial context.

In some forms of embodiment, the method according to the present invention includes a processing step of each digital information stream to obtain a corresponding encoded digital stream. In some forms of embodiment, the processing step also comprises at least one channel pre-coding step, which provides to increase the redundancy of the digital information streams. The redundancy thus obtained confers more robustness on the transmission of the pulsed data signals.

According to one aspect of the present invention, the processing step comprises at least a power pre-coding and mapping stage, which provides to encode each information symbol of the digital information streams in a new sequence of several symbols from which each of the pulsed wave forms is obtainable. The at least one power pre-coding and mapping stage provides to reduce the ratio between peak value and mean value of the power of the signal associated to the pre-coded digital stream within a time interval comprised between two of the pulsed wave forms.

In some forms of embodiment, the processing step of the method according to the present invention comprises at least a spatial pre-coding stage, that provides to apply to each digital information stream a space-time encoding processing so as to exploit the spatial diversity offered by the electric network provided with several electric conductors, each of which defining an input and/or an output for the transmission of the one or more pulsed data signals.

The present invention also concerns an apparatus for transmitting, through an electric network, one or more digital information streams containing data relating to information to be transmitted, the apparatus comprising an electric feed device at input and being connected at output to electric conductors associated to the electric network.

According to the present invention, the apparatus comprises an electronic pulse signals generation device configured to generate one or more data signals as pulsed analog data signals defined by an alternate succession of pulsed wave forms and periods without a signal. Furthermore, the apparatus comprises a filtering device for the adaptation of the pulsed analog signals to the conditions of the transmission mean defined by the electric network, an adaptive coupler provided with an electronic coupling circuit of the adaptive type connected to the electric conductors and configured to physically adapt the pulsed data signals to the line impedance of the electric network and to superimpose the data signals, in the electric conductors, over a network signal transmitted by the latter.

The use of such a transmission apparatus, able to generate and transmit pulsed analog signals, allows a considerable simplification of construction and plant, with consequent benefits in terms of production times and costs.

In some forms of embodiment, the apparatus also comprises a control unit configured to carry out at least a processing step, before the generation of the one or more data signals by means of the electronic generation device that comprises: at least a channel pre-coding step that provides to increase the redundancy of each digital information stream, in order to obtain a corresponding pre-coded digital stream;
at least one power pre-coding and mapping stage, that provides to encode each information symbol of the digital information streams in a new sequence of several symbols from which each of the pulsed wave forms is obtainable, the at least one power pre-coding and mapping stage providing to reduce the ratio between peak value and mean value of the power of the signal associated to the pre-coded digital stream within a time interval comprised between two of the pulsed wave forms.

In some forms of embodiment, the pulsed signal electronic generation device comprises a first switch connected to the electric feed device and to an electric accumulation element and configured to load the latter electrically, and a second switch connected to the electric accumulation element and configured to discharge the latter electrically. The first switch and second switch are able to be activated alternately to generate the one or more data signals.

Other forms of embodiment provide that the pulsed signal electronic generation device comprises an electronic generation circuit provided with electronic components configured to implement the generation of pulsed signals on a digital platform.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some forms of embodiment, given as a non-restrictive example with reference to the attached drawings wherein:
- figs. 1a-1c are schematic views of possible applications of an apparatus for transmitting data signals according to the present invention;
- fig. 2a is a block diagram of forms of embodiment of a method for transmitting data signals according to the present invention;
- fig. 2b is a variant of fig. 2a;
- fig. 3 is an example of a signal transmitted using the method in fig. 2a;
- fig. 4 is a representation using a functional block diagram of forms of embodiment of the apparatus in fig. 1.

In the following description, the same reference numbers indicate identical steps and parts of the method and apparatus for transmitting data signals through electric lines according to the present invention, also in different forms of embodiment. It is understood that elements and characteristics of one form of embodiment can be conveniently incorporated into other forms of embodiment without further clarifications.

### DETAILED DESCRIPTION OF SOME FORMS OF EMBODIMENT

We shall now refer in detail to the various forms of embodiment of the present invention, of which one or more examples are shown in the attached drawings. Each example is supplied by way of illustration of the invention and shall not be understood as a limitation thereof. For example, the characteristics shown or described insomuch as they are part of one form of embodiment can be adopted on, or in association with, other forms of embodiment to produce another form of embodiment. It is understood that the present invention shall include all such modifications and variants.

Before describing these forms of embodiment, we must clarify that the transmission of signals provided in the forms of embodiment described here is not intended according to the conventional idea of ultra-wide band (UWB), because it concerns the transmission of signals at low rate and broadband with respect to the speed of transmission of the digital information stream.

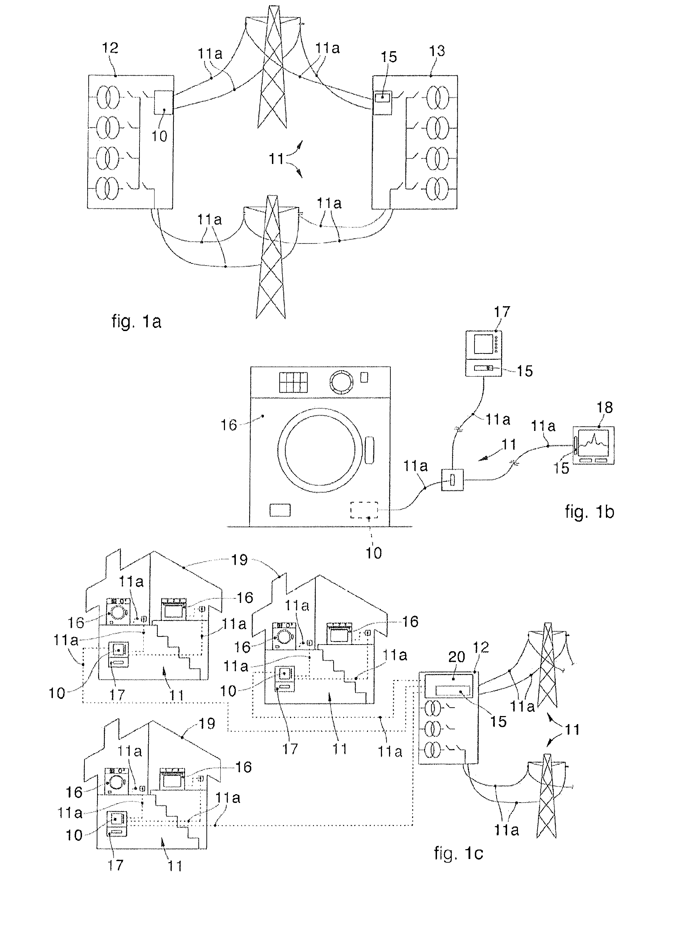

Figs. 1a-1c are used to describe schematically possible applications of a transmission apparatus 10, or transmitter, for transmitting data signals according to the present invention, in which it can be associated with electric networks 11 of the distribution or industrial type (fig. 1a), the domestic type (fig. 1b), or combined domestic and distribution (fig. 1c).

Each electric network 11 can include electric conductors 11 a through which the electric power signal or network signal is conducted and, for example in the case of distribution or industrial networks, it can include one or more transformer substations 12, 13.

Fig. 1a is used to describe by way of example two transformer substations, in particular a first substation 12 and a second substation 13 which are connected to each other by the electric conductors 11a of an electric network 11.

According to some forms of embodiment, the transmission apparatus 10 is configured to transmit data signals through the electric conductors 11 a to a reception apparatus or receiver 15.

In possible implementations, the receiver 15 can be installed inside the second substation 13, and is configured to extract in a known manner the information contained in the signals transmitted by the transmission apparatus 10 and carried to the second substation 13 by the electric conductors 11a.

The reciprocal communication between the substations 12 and 13 can allow to remotely execute operations to automate the electric networks 11. In this case, it is fundamental that the transmission is robust and reliable, in order to prevent sending and receiving commands that can lead to erroneous and dangerous maneuvers.

In some forms of embodiment, the transmission apparatus 10 and receiver 15 can be integrated in a single transceiver device able to establish a two-directional communication.

In possible applications, for example in the home, described with reference to by way of example to fig. 1b, the transmission apparatus 10 can be integrated inside a domestic appliance 16. It can be connected to the domestic electric network 11 to transmit through the corresponding electric conductors 11 a a data signal relating to the consumption of the domestic appliance 16. The data signal can be transmitted for example to a meter 17 or a domotic control unit 18, each provided with a receiver 15.

Fig. 1c is used to describe another solution, in which it can be provided that each of a plurality of domestic users 19 includes a transmission apparatus 10 integrated inside its electric energy meter 17. Each transmission apparatus 10 can be connected to the electric network 11 to transmit, through the corresponding conductors 11 a, the consumption relating to the domestic user 19 to a concentrator 20, which can for example be located in one of the transformer substations 12, 13 of the distribution electric network 11.

Data signals arriving from transmission apparatuses 10 integrated in respective domestic appliances 16 can be transmitted to the meter 17 of each domestic user 19.

Furthermore, an example application of the transmission apparatus 10 can be to control, monitor and adjust the lighting devices in an anthropized structure, such as a commercial building, an airport, an industrial building or a home.

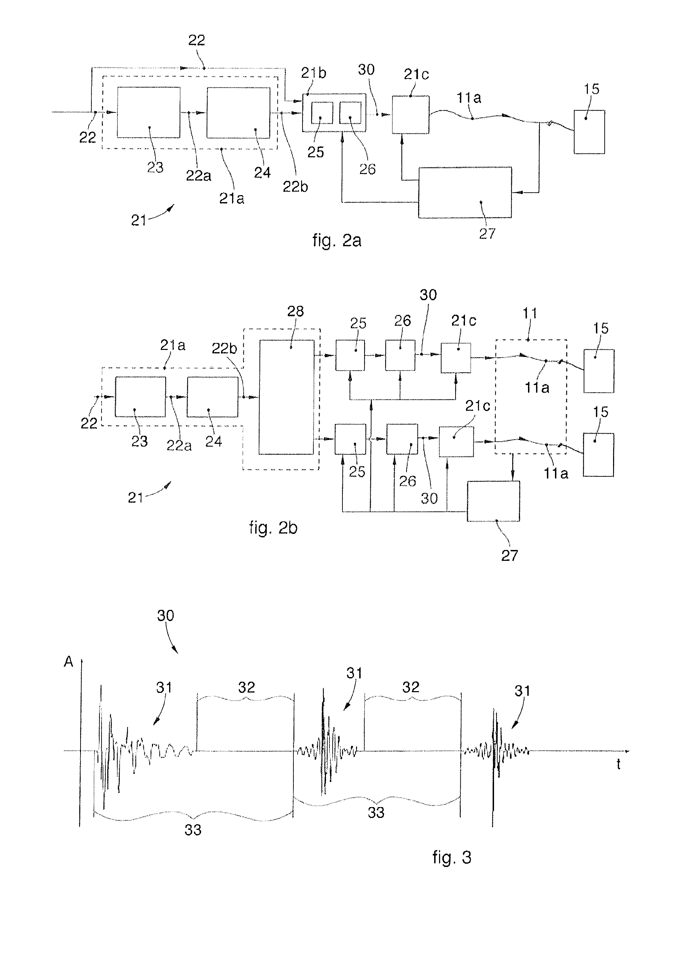

Fig. 2a is used, using functional blocks, to describe forms of embodiment of a method for transmitting data signals, indicated in its entirety by the reference number 21.

The method 21 provides to generate one or more pulsed data signals 30 starting from a digital information stream 22, in which the pulsed data signals 30 are broadband with respect to the data rate of the same digital information stream 22, and the transmission of the signals through an electric network 11, which functions as a transmission mean.

The method 21 can provide a processing step 21 a of the digital information stream 22 containing one or more digital data signals comprising one or more symbols, each of which represents a piece of information to be transmitted. The data can come for example from instruments, sensors or detection devices, or measurement or control devices of various types.

In possible implementations, the digital information stream 22 can be encoded in a channel pre-coding step, stage or operation 23. The channel pre-coding step 23 provides to repeat, by means of known redundancy techniques, the signal or signals contained in the digital information stream 22, to strengthen the communication and obtain a pre-coded digital information stream 22a. A possible implementation of the channel pre-coding step 23 is given by the repetition of the symbols of the digital information stream 22, or information symbols, for a determinate number of times.

The pre-coded digital stream 22a is subsequently processed in a power pre-coding and mapping step or stage or operation 24. The power pre-coding and mapping step provides to reduce the ratio between peak value and mean value of the power (PAPR - Peak to Average Power Ratio) of the signal associated to the pre-coded digital stream 22a within a time interval comprised between two successive wave forms or signatures, also known as epoch. The reduction in the ratio between maximum and average value, or PAPR, can be made by introducing into the pre-coded digital stream 22a wave forms of increasing length but, for example, decreasing amplitude. In other words, each information symbol of the pre-coded digital stream 22a is encoded in a new sequence of several symbols, to obtain an encoded digital stream 22b.

In some forms of embodiment, the sequences of symbols thus obtained can be orthogonal.

The average power of the signal data that defines the encoded digital stream 22b obtained with the power precoding and mapping 24 is kept low, because it is scaled down, also taking into account a possible period of inactivity or silent period during which no signals are transmitted, but the peak power goes down because it is calculated in correspondence with the maximum, decreasing, of each wave form or signature 31 of the pulsed signal 30.

The use of the power precoding and mapping 24 and consequent reduction in the ratio between maximum and average values, or PAPR, entails a simplification of the physical structure or hardware of the interface or front end of the transmission apparatus 10, and allows to further improve characteristics in terms of coexistence of a plurality of data signals.

In some forms of embodiment, the power precoding and mapping 24 provides to map sequences of bits encoded by the channel pre-coding stage 23 into symbols that for example can belong to a multi-level alphabet.

The method 21 includes a signal generating step 21b, which provides that the digital information stream 22 is modulated according to a modulation operation or stage 25, during which it is provided that the digital information stream 22 is converted into a pulsed data signal 30 of the analog type.

In possible implementations, shown by way of example in figs. 2a and 2b, in the modulation stage 25 the encoded digital stream 22b is modulated to be converted into the pulsed data signal 30 of the analog type.

The method 21 also provides that the signal generating step 21b includes a filtering operation or stage 26 in which it is provided to adapt the spectrum of the pulsed data signal 30 to the conditions of the transmission mean defined by the electric network 11 with the corresponding electric conductors 11a.

This adaptation is performed with the purpose, for example, of maximizing the signal to noise ratio (SNR) measured at the receiver 15, given a constraint of power spectral density (PSD) or overall power of the pulsed data signal 30 transmitted.

In some forms of embodiment, the adaptation performed in the filtering stage 26 can take into account the frequency response of the channel and the line impedance of the electric network 11. The line impedance is the impedance of the electric network 11 calculated at the gate to which the transmission apparatus 10 is connected.

By pulsed data signal 30 we mean a data signal having a trend defined by a succession of pulses, or a succession of groups of pulses.

The pulsed data signal 30 obtained at the end of the signal generating step 21b is a broadband signal having a band spectrum much larger than the original digital information stream 22. This allows to exploit the difference in frequency so as to offer greater robustness to the pulsed data signal 30 transmitted and containing the information present in the digital information stream 22.

Fig. 3 is used to describe forms of embodiment of the pulsed data signal 30 in which it is defined by a succession of signatures 31 alternated with periods without signal, also called silent periods 32.

The pulsed wave forms or signatures 31 can include a single pulse or a plurality of consecutive pulses grouped together, as shown by way of example in fig. 3.

The time interval between the beginning of two consecutive signatures 31 is known as epoch 33.

The pulsed wave forms or signatures 31 are therefore separated by silent periods 32 and are transmitted with periods equal to the epoch 33.

In possible implementations, successive signatures 31 associated with successive symbols of the encode digital stream 22b can vary in the form, so as to guarantee maximum adaptation to the characteristics of the transmission channel, interference and line impedance of the electric network 11 through which they are transmitted.

The method 21 also includes a coupling and transmission step 21 c that allows to transmit the pulsed data signal 30 in the electric conductors 11a of the electric network 11 toward the receiver 15.

Decoding may also be provided, by the receiver 15, of the pulsed data signal 30, to find the original digital information stream 22.

In this way, the transmission of the information contained in the digital information stream 22 may be considered completed.

In possible solutions, the method 21 can include a step of assessing the line impedance 27 during which a resistive component and a reactive component of the line impedance of the electric network 11 are calculated, in order to calculate the disadaptation of the pulsed data signal 30 generated.

In possible implementations, an assessment of the frequency response of the channel can be provided at the receiver 15.

In some forms of embodiment, it may be provided that the adaptation to the line impedance is obtained partly by means of software, in the modulation 25 and filtering 26 stages, on a programmable platform and partly by means of hardware in the coupling and transmission step 21c, with discrete electronic devices. Examples of programmable platforms are FPGA (Field Programmable Gate Array) or DSP (Digital Signal Processor).

Other forms of embodiment can provide that the adaptation to the line impedance is obtained entirely by means of hardware in the coupling and transmission step 21c, for example in a coupling device, as described in detail hereafter in the present description.

In order to maximize the efficiency of the transmission apparatus 10, that is, to maximize the signal noise ratio (SNR) to the receiver 15 under a constraint of total energy or power spectral density (PSD) transmitted, the pulsed data signal 30 can be transmitted at frequencies where the disadaptations are minimized.

In some forms of embodiment, it may be provided to remodulate the power transmitted according to a scale factor that takes into account the disadaptations, so that the actual spectrum of the pulsed data signal 30 transmitted coincides exactly with the one desired, and is not significantly different due to the losses of disadaptation and reflection that arise at the point of connection of the transmission apparatus 10 to the electric network 11.

In other forms of embodiment, the pulsed data signal 30 can be designed and hence modulated in the modulation stage 25 as the sum of pulsed wave forms 31 that are similar in form but distanced by a delay Δᵢ, where the subscript indicates the i-th wave form.

Furthermore, the generic pulsed data signal 30 at output from the modulation stage 25 can be described, in the time domain, by the sum of as many components as there are epochs 33.

The definition of the pulsed data signal 30 in the domain of continuous time and the corresponding transposition to the frequency domain, through Fourier transform, can allow to design the value of Δ to make the frequency intervals in which the pulsed data signal 30 behaves like a notch filter coincide with the frequencies where the transmission channel has greater attenuation or where it is not deemed appropriate to transmit the pulsed data signal 30.

Fig. 2b is used to describe forms of embodiment of the method 21 in which the power precoding and mapping stage 24 can be followed by a spatial pre-coding step or stage 28.

These solutions can be used, for example, when the transmission mean has several inputs and outputs available, that is, when the electric network 11 includes a plurality of pairs of electric conductors 11a.

In these forms of embodiment, the spatial pre-coding stage 28 provides to implement known techniques to exploit the spatial diversity given by the electric network 11 to several inputs and outputs, or multiple-input, multiple-output, or MIMO. In fact, when more than two electric conductors 11a are present, it is possible to instantiate a MIMO communication by transmitting pulsed data signals 30 on different pairs of electric conductors 11a. A possible implementation of the spatial pre-coding stage 28 is given by, but is not limited to, so-called "space-time block codes".

With reference to fig. 2b, the method 21 can provide that the signal generating step 21b includes a plurality of modulation stages 25, for example equal in number to the number of inputs of the transmission mean, where the inputs are defined by the electric conductors 11 a and the transmission mean is defined by the electric network 11.

Each modulation stage 25, performed after the spatial pre-coding step 28, provides to convert the encoded digital stream 22b into pulsed data signals 30 provided with signatures 31, followed by silent periods 32 and with a period equal to an epoch 33.

The amplitude, step, number and position of the pulses of each signature 31, and also the duration of each epoch 33, are designed to maximize the signal noise ratio (SNR) to the receiver 15 on each of the channels that the transmission mean has available, to avoid the bands where the electric network 11 has strong attenuations or where there is strong interference, to minimize the energy and/or power spectrum density (PSD) of the pulsed data signals 30 transmitted, and possibly to prevent the transmission of said signals in prohibited bands.

It may be provided to design the pulsed data signals 30 to contain the corresponding average PSD within a spectrum from a few MHz to a few dozen MHz or in other portions of the frequency spectrum.

In some forms of embodiment, the modulation stage or stages 25 are implemented on a digital signal processing platform (FPGA or DSP).

In possible solutions, one or more modulation stages 25 can exploit known techniques to generate broadband signals with low peak power, such as for example radar pulse compression techniques.

Each component of the pulsed data signal 30 is a function of the output from the spatial precoding stage 28 to the n-th epoch, the amplitude of the signature 31 to the n-th epoch 33, which allows to modulate the amplitude. Each component also depends on the duration of the epoch 33, on the instant in time, and on the trend of the pulsed wave form, taking into account the temporal shift or offset with which the signature 31 is transmitted in the n-th epoch 33, which allows to modulate the position.

In some forms of embodiment, the amplitude modulation is not adaptive, that is, it does not vary as the characteristics of the channel vary, while the offset is equal to zero.

In other forms of embodiment, the modulation can be of the amplitude, position or a combination of them both, and can be adaptive, both in the order of modulation and in the number of levels of amplitude and in the number of offsets, and in the form of the pulse.

In some forms of embodiment, the pulse coincides with the pulse response of a band-pass filter with band B, and is flat in pass band.

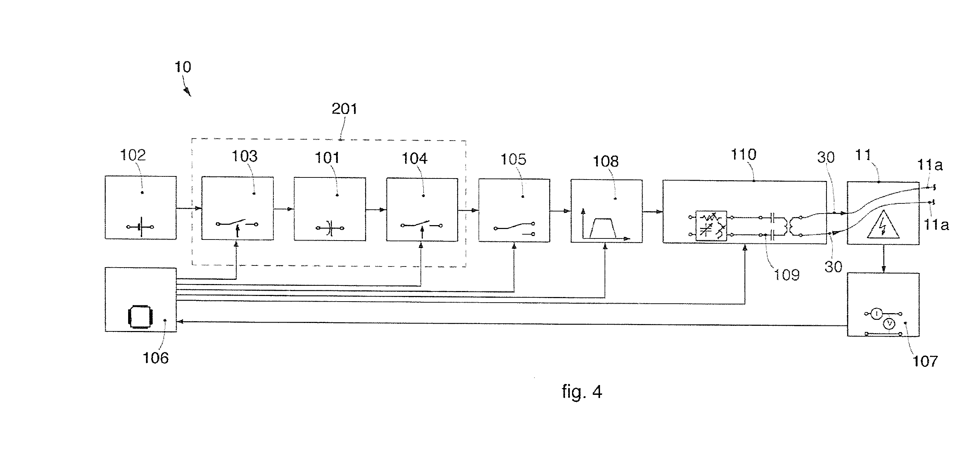

Fig. 4 is used to describe forms of embodiment of a transmission apparatus 10 for the transmission of pulsed data signals 30 in which it includes an electronic pulsed signal generation device 201 configured to generate the pulsed data signals 30 as pulsed analog data signals defined by an alternate succession of pulsed wave forms, or signatures 31 and periods without a signal or silent periods 32.

In some forms of embodiment, the electronic generation device 201 can include, as basic physical components or hardware, an electric accumulation element 101, a first load switch 103 and a second discharge switch 104, both connected to the electric accumulation element 101.

In possible solutions, the electric accumulation element 101 can be a capacitor or inductor or other passive element, or a battery of capacitors, inductors or other passive elements.

The transmission apparatus 10 can also include an electric feed device 102 at input, to which the first load switch 103 is connected.

In some forms of embodiment, the electric accumulation element 101 can be interposed between the two switches 103 and 104, to which it is connected.

The discharge switch 104 can also be connected to a sign switch 105.

According to some forms of embodiment, the transmission apparatus 10 can include a control unit 106.

In particular, the control unit 106 can be configured to carry out at least the processing step 21a, before the generation of the one or more data signals 30 by means of the electronic generation device 201, which comprises:
- at least a channel pre-coding step 23 that provides to increase the redundancy of each digital information stream 22, in order to obtain a corresponding pre-coded digital stream 22a;
- at least one power pre-coding and mapping stage 24, that provides to encode each information symbol of the digital information streams 22 in a new sequence of several symbols from which each of the pulsed wave forms 31 is obtainable, said at least one power pre-coding and mapping stage 24 providing to reduce the ratio between peak value and mean value of the power of the signal associated to the pre-coded digital stream 22a within a time interval comprised between two of the pulsed wave forms 31.

Moreover, the control unit 106 can be connected at least to the load and discharge switches 103, 104 and configured to control and command the functioning thereof (see fig. 4).

In some forms of embodiment of the method 21, it may be provided that the load switch 103 is activated during the silent period 32, while the discharge switch 104 is activated in the instants complementary to the epoch 33 with respect to the silent period 32, that is, during the execution of the corresponding signature 31. The two switches 103, 104 are never active at the same time.

Furthermore, the control unit 106 can be connected to the sign switch 105, to control the functioning thereof (see fig. 4).

In some forms of embodiment, the electronic generation device 201, instead of being defined by the load switch 103, the discharge switch 104 and the electric accumulation element 101, can consist of electronic components configured for the implementation on a digital platform of the generation of pulsed signals and for the functional emulation via software of said hardware components.

The electronic generation device 201 can allow to generate signatures 31 adapted to the frequency response of the transmission channel and the line impedance at input to the electric network 11. This can be intended, for example, to maximize the signal noise ratio to the receiver 15.

In some forms of embodiment, the assessment of the frequency response is obtained at the receiver 15.

Furthermore, in some forms of embodiment, an assessment module of the line impedance 107 is provided, configured to effect an assessment of the line impedance 27.

In particular, the assessment module of the line impedance 107 is configured to calculate a resistive component and a reactive component of the corresponding line impedance. The assessment module of the line impedance 107 can be connected to the electric network 11. The assessment module of the line impedance 107 can also be connected to the control unit 106, to transmit to it the necessary information (see fig. 4).

The control unit 106 can be configured to process the information relating to the frequency response of the channel and the line impedance thus calculated and/or assessed.

In some forms of embodiment, the transmission apparatus 10 includes a filtering device 108 connected downstream of the sign switch 105. The filtering device 108 can be provided to adapt the pulsed analog signals to the conditions of the transmission mean defined by the electric network 11.

The filtering device 108 can be a low pass or pass band filter made using only passive elements, or it can be an adaptive filter and can be designed and configured as a function of the line impedance or frequency response of the channel to occupy suitable spectral portions and to allocate there the available power.

Furthermore, the filtering device 108 can be configured to adapt the pulsed data signals 30 to select suitable spectral portions occupied by the pulsed data signals 30.

The control unit 106 can be connected to the filtering device 108, to control its functioning.

The transmission apparatus 10 can comprise an adaptive coupler 110 connected between the filtering device 108 and the electric network 11. The transmission apparatus 10 is therefore connected to the electric network 11 through the adaptive coupler 110, which receives from the filtering device 108 the pulsed data signals 30 and injects them into the electric network 11 through the electric conductors 11a.

The control unit 106 can also be connected to the adaptive coupler 110, to control its functioning.

The adaptive coupler 110 can include an electronic coupling circuit 109 that connects, at output, the transmission apparatus 10 to the electric conductors 11a cited above.

The coupling circuit 109 can be the adaptive type and configured to perform a physical or hardware adaptation, using discrete electronic components, of the pulsed data signals 30 to the line impedance of the electric network 11 on the band of the pulsed data signals 30, and hence allows to implement at least part of the filtering stage 26 described above. Furthermore, the coupling circuit 109 is configured to superimpose the pulsed data signals 30 generated by method 21 over the network signal carried by the electric conductors 11 a. It can also be provided that the coupling circuit 109 is configured to block the propagation of the pulsed data signal 30 to the filtering device 108.

In possible solutions, the coupling circuit 109 can include a transformer, including a center tapped transformer, capacitors, varistors and other passive protection elements.

While the coupling circuit 109 is always made with discrete electronic components, active or passive, in some forms of embodiment of the transmission apparatus 10 it may be provided that the electronic circuitry comprising the load switch 103, the discharge switch 104, the sign switch 105, the assessment module of the line impedance 107 and the filtering device 108, is partly or completely implemented on a digital platform and then, in practice, emulated by means of suitable computer programs and algorithms, that is, software.

Some forms of embodiment can provide the execution of various steps, passages and operations, as described above. The steps, passages and operations can be done at least partly with instructions performed by a machine which cause the execution of certain steps by a general-purpose or special-purpose processor. Alternatively, these steps, passages and operations can be performed by specific hardware components that contain hardware logic to perform the steps, or by any combination of components for programmed computers and personalized hardware components.

A machine-readable or computer-readable program (or computer instructions) can determine which tasks can be done in accordance with the method according to the present description. In some forms of embodiment, the program is a machine-readable or computer-readable software. The machine or computer includes a code to generate and memorize information and data introduced or generated during the course of the method according to the present description.

Forms of embodiment of the method in accordance with the present description can be included in a program for computers that can be memorized in a computer-readable mean that includes the instructions that, once performed by the transmission apparatus 10, determine the execution of the method discussed here.

In particular, elements according to the present invention can be given as machine-readable means to memorize the instructions which can be carried out by the machine. The machine-readable means can include, without being limited to, floppy disks, optical disks, CD-ROM, optical-magnetic disks, ROM, RAM, EPROM, EEPROM, optical or magnetic cards, propagation means or other types of machine-readable means suitable to memorize electronic information. For example, at least parts of the present invention can be downloaded as a computer program that can be transferred from a remote computer (for example a server) to a requesting computer (for example a client), by means of data signals received with carrier waves or other propagation means, via a communication connection (for example a modem or a network connection).

It is clear that modifications and/or additions of parts and/or steps may be made to the transmission method 21 and transmission apparatus 10 as described heretofore, without departing from the field and scope of the present invention.

It is also clear that, although the present invention has been described with reference to some specific examples, a person of skill in the art shall certainly be able to achieve many other equivalent forms of method and apparatus for transmitting data signals, having the characteristics as set forth in the claims and hence all coming within the field of protection defined thereby.

Although the above refers to forms of embodiment of the invention, other forms of embodiment can be provided without departing from the main field of protection, which is defined by the following claims.

## Claims

1. Method for transmitting through an electric network (11) one or more digital information streams (22) containing data relating to information to be transmitted, said method comprising a signal generating step (21b) that generates one or more data signals (30) and a coupling and transmission step (21c) of said one or more data signals (30), **characterized in that** said signal generating step (21b) is a step of generating a pulsed signal that comprises one or more modulation operations (25) and one or more filtering operations (26) in which said one or more digital information streams (22) are converted into said one or more data signals (30), in which said one or more data signals (30) are generated as pulsed analog data signals defined by an alternate succession of pulsed wave forms (31) and periods without a signal (32), and in which said one or more data signals (30) are adapted to the characteristics of the transmission mean defined by said electric network (11), said method also comprising a processing step (21a), before said signal generating step (21b) and which comprises at least a channel pre-coding step (23) that provides to increase the redundancy of each digital information stream (22), in order to obtain a corresponding pre-coded digital stream (22a), wherein said processing step (21 a) also comprises at least one power pre-coding and mapping stage (24), that provides to encode each information symbol of said digital information streams (22) in a new sequence of several symbols from which each of said pulsed wave forms (31) is obtainable, said at least one power pre-coding and mapping stage (24) providing to reduce the ratio between peak value and mean value of the power of the signal associated to the pre-coded digital stream (22a) within a time interval comprised between two of said pulsed wave forms (31).

2. Method as in claim 1, **characterized in that** said signal generating step (21b) provides to generate broadband pulsed data signals (30) with respect to the data transmission speed of said digital information streams (22).

3. Method as in claim 1 or 2, **characterized in that** said processing step (21a) comprises at least a spatial pre-coding stage (28), that provides to apply to each digital information stream (22) a space-time encoding processing so as to exploit the spatial diversity offered by the electric network (11) provided with several electric conductors (11a), each of which defining an input and/or an output for the transmission of said one or more pulsed data signals (30).

4. Method as in any claim hereinbefore, **characterized in that** said coupling and transmission step (21c) provides the physical adaptation of said one or more pulsed data signals (30), by means of discrete electronic components, to the line impedance of said electric network (11) on the band of said pulsed data signals (30) **and in that** said coupling and transmission step (21c) comprises a step of assessing the line impedance (27) during which a resistive component and a reactive component of said line impedance are calculated.

5. Apparatus for transmitting through an electric network (11) one or more digital information streams (22) containing data relating to information to be transmitted, said apparatus comprising an electric feed device (102) at input and being connected at output to electric conductors (11a) associated to said electric network (11), **characterized in that** it comprises:
- an electronic generation device (201) configured to generate one or more data signals (30) as pulsed analog data signals defined by an alternate succession of pulsed wave forms (31) and periods without a signal (32),
- a filtering device (108) for the adaptation of said pulsed analog signals to the conditions of the transmission mean defined by said electric network (11),
- an adaptive coupler (110) provided with an electronic coupling circuit (109) of the adaptive type connected to said electric conductors (11a) and configured to physically adapt said data signals (30) to the line impedance of said electric network (11) and to superimpose said data signals (30), in said electric conductors (11a), over a network signal transmitted by the same electric conductors (11a);
- a control unit (106) configured to carry out at least a processing step (21 a), before the generation of the one or more data signals (30) by means of the electronic generation device (201), that comprises:
at least a channel pre-coding step (23) that provides to increase the redundancy of each digital information stream (22), in order to obtain a corresponding pre-coded digital stream (22a);
at least one power pre-coding and mapping stage (24), that provides to encode each information symbol of said digital information streams (22) in a new sequence of several symbols from which each of said pulsed wave forms (31) is obtainable, said at least one power pre-coding and mapping stage (24) providing to reduce the ratio between peak value and mean value of the power of the signal associated to the pre-coded digital stream (22a) within a time interval comprised between two of said pulsed wave forms (31).

6. Apparatus as in claim 5, **characterized in that** said electronic generation device (201) comprises a first switch (103) connected to said electric feed device (102) and to an electric accumulation element (101) and configured to load the latter electrically, and a second switch (104) connected to said electric accumulation element (101) and configured to discharge the latter electrically, said first switch (103) and second switch (104) being able to be activated alternately to generate said one or more data signals (30).

7. Apparatus as in claim 5, **characterized in that** said electronic generation device (201) is provided with electronic components configured to implement the generation of pulsed signals on a digital platform.

8. Apparatus as in any claim from 5 to 7, **characterized in that** it comprises an assessment module of the line impedance (107) connected to said electric network (11) to calculate a resistive component and a reactive component of the corresponding line impedance, **and in that** said filtering device (108) is configured as a function of said line impedance and configured to adapt said pulsed data signals (30) in order to select suitable spectral portions occupied by said pulsed data signals (30).

9. Apparatus as in claim 8, **characterized in that** said electronic coupling circuit (109) is made with discrete electronic components, active or passive, **and in that** at least one of either the first switch (103), the second switch (104), the assessment module of the line impedance (107) or the filtering device (108) is implemented on a digital platform.
